# EUROPÄISCHE PATENTANMELDUNG

(11) **EP 1 494 017 A1**
(43) Veröffentlichungstag der Anmeldung: **05.01.2005**
(21) Anmeldenummer: 04102559.4
(22) Anmeldetag: 07.06.2004
(51) Int. Cl.: G01N 21/95

(54) **Vorrichtung und Verfahren zur Wafer-Inspektion**

(30) Priorität: 03.07.2003 DE 10330003
(71) Anmelder: Leica Microsystems Semiconductor GmbH, 35578 Wetzlar (DE)
(72) Erfinder: Kreh, Albert, 35606, Solms (DE); Backhauss, Henning, 35578 Wetzlar (DE)
(74) Vertreter: Reichert, Werner F., Dr.

(57) **Zusammenfassung**

Die Erfindung betrifft eine Vorrichtung zur Inspektion eines Wafers, umfassend zumindest eine Beleuchtungseinrichtung (2), um einen Beleuchtungs-Lichtstrahl (6) auf eine Oberfläche (5) des Wafers (4) abzustrahlen, und eine Bilderfassungseinrichtung (3), um ein Bild von einem beleuchteten Bereich (32) auf der Oberfläche des Wafers in einer Mehrzahl von Spektralbereichen zu erfassen, wobei eine Farbänderungseinrichtung (17,18,19) vorgesehen ist, um das Farbspektrum des Beleuchtungs-Lichtstrahls oder des reflektierten Lichtstrahls zu verändern. Die Wafer-Inspektionsvorrichtung zeichnet sich dadurch aus, dass die Farbänderungseinrichtung derart ausgelegt ist, dass das Farbspektrum des Beleuchtungs-Lichtstrahls oder des von der Oberfläche des Wafers aufgenommenen Bildes an die spektrale Empfindlichkeit der Bilderfassungseinrichtung anpassbar ist.

## Beschreibung

Die vorliegende Erfindung betrifft eine Vorrichtung und ein Verfahren zur Inspektion eines Wafers, insbesondere zur Detektion von Makro-Defekten auf der Oberfläche eines Wafers.

Zur Steigerung der Qualität und Effizienz bei der Herstellung von integrierten Schaltkreisen werden Vorrichtungen zur Detektion von Makro-Defekten auf der Oberfläche von Wafern eingesetzt, so dass für fehlerhaft befundene Wafer ausgesondert oder solange nachbehandelt werden können, bis die Qualität eines gerade inspizierten Wafers zufrieden stellend ist.

Es sind optische Wafer-Inspektionsvorrichtungen bekannt, die eine Beleuchtungseinrichtung, um einen Beleuchtungs-Lichtstrahl auf eine Oberfläche des Wafers abzustrahlen, und eine Bilderfassungseinrichtung umfassen, um ein Bild von einem beleuchteten Bereich auf der Oberfläche des Wafers in einer Mehrzahl von Spektralbereichen, d. h. spektral aufgelöst, zu erfassen. Dabei kann es zu Problemen bei der Weiterverarbeitung der von der Bilderfassungseinrichtung erfassten Farbbildsignale kommen, wenn die Farbbildkanäle der Bilderfassungseinrichtung ungleichmäßig ausgesteuert sind, was in einzelnen Farbbildkanälen zu einem relativ niedrigen Signal-zu-Rausch-Verhältnis oder zu einer Übersteuerung führen kann.

DE 101 32 360 C1 offenbart eine Vorrichtung zur farbneutralen Helligkeitseinstellung im Beleuchtungsstrahlengang eines Mikroskops. Der Vorrichtung liegt die Erkenntnis zu Grunde, dass bei Mikroskopen, die mit einer einem schwarzen Strahler ähnlichen Glühlampe betrieben werden, die Farbtemperatur des von der Glühlampe emittierten Farbspektrums bei einer Reduzierung der zugeführten Lampenleistung vom blauen Spektralbereich aus zum roten Spektralbereich verschoben wird. Zur Kompensation der Rotverschiebung ist in dem Beleuchtungsstrahlengang ein variabler optischer Filter vorgesehen, dessen Transmissionsvermögen für rotes Licht sich über die Filterfläche hinweg ändert. Durch Verschieben des Filters in dem Beleuchtungsstrahlengang wird eine Blauverschiebung herbeigeführt, welche die durch Verminderung der elektrischen Leistung bedingte Rotverschiebung kompensiert.

DE 100 31 303 A1 offenbart eine Beleuchtungsvorrichtung mit LEDs. Durch Degeneration des LED-Materials ändern sich mit der Zeit Intensität und Wellenlänge des emittierten LED-Lichtes. Um gleich bleibende Beleuchtungseigenschaften zu erzielen, ist eine Regelung vorgesehen, sodass eine vorgegebene Farbtemperatur und Intensität der LEDs aufrechterhalten werden kann.

Aufgabe der vorliegenden Erfindung ist es, eine Vorrichtung, ein Verfahren und ein Computerprogramm bereitzustellen, womit sich Makro-Defekte auf der Oberfläche eines Wafers noch zuverlässiger detektieren lassen.

Diese Aufgabe wird gelöst durch eine Vorrichtung mit den Merkmalen nach Anspruch 1 und durch ein Verfahren mit den Merkmalen nach Anspruch 12. Weitere vorteilhafte Ausführungsformen sind Gegenstand der rückbezogenen Unteransprüche.

Gemäß der vorliegenden Erfindung wird eine Vorrichtung zur Inspektion eines Wafers bereitgestellt, mit mindestens einer Beleuchtungseinrichtung, die einen Beleuchtungs-Lichtstrahl auf eine Oberfläche des Wafers abstrahlt, und einer Bilderfassungseinrichtung, die eine vorgegebene spektrale Empfindlichkeit aufweist und ein Bild von einem beleuchteten Bereich auf der Oberfläche des Wafers in einer Mehrzahl von Spektralbereichen erfasst, wobei eine Farbänderungseinrichtung vorgesehen ist, um das Farbspektrum des Beleuchtungs-Lichtstrahls oder des von der Oberfläche des Wafers aufgenommenen Bildes zu verändern. Die Vorrichtung zeichnet sich erfindungsgemäß dadurch aus, dass die Farbänderungseinrichtung derart ausgelegt ist, dass das Farbspektrum des Beleuchtungs-Lichtstrahls oder des von der Oberfläche des Wafers aufgenommenen Bildes an die spektrale Empfindlichkeit der Bilderfassungseinrichtung anpassbar ist.

Bilderfassungseinrichtungen, wie beispielsweise Farb-CCD-Kameras, weisen in den zur Bilderfassung verwendeten Spektralbereichen, beispielsweise im roten, grünen und blauen Spektralbereich, üblicherweise unterschiedliche spektrale Empfindlichkeiten auf. Außerdem weist auch die Beleuchtungseinrichtung ein gewisses Farbspektrum auf, beispielsweise das eines Temperaturstrahlers mit einer vorgegebenen Farbtemperatur. Daraus können unterschiedliche Intensitäten der einzelnen Farbbildsignale der Bilderfassungseinrichtung resultieren. Die Intensitäten der einzelnen Farbbildsignale der Bilderfassungseinrichtung können gar erheblich voneinander abweichen.

Erfindungsgemäß wird dieses Problem dadurch behoben, dass eine Farbänderungseinrichtung auf den Beleuchtungs-Lichtstrahl oder auf Licht von dem von der Bilderfassungseinrichtung erfassten Oberflächenbereich des Wafers gezielt einwirkt, um das jeweilige Farbspektrum an die spektrale Empfindlichkeit der Bilderfassungseinrichtung anzupassen. Zu diesem Zweck kann die Intensität des Beleuchtungs-Lichtstrahls oder von Licht von dem von der Bilderfassungseinrichtung erfassten Oberflächenbereich des Wafers in einzelnen Spektralbereichen gezielt abgeschwächt werden, so dass eine gleichmäßigere Aussteuerung der Farbbildkanäle der Bilderfassungseinrichtung erzielt werden kann.

Bevorzugt wird die Intensität eines Farbbildsignals der Bilderfassungseinrichtung in einem Spektralbereich durch Verändern des Farbspektrums des Beleuchtungs-Lichtstrahls oder des von der Bilderfassungseinrichtung von der Oberfläche des Wafers aufgenommenen Bildes relativ zu der Intensität eines anderen Farbbildsignals der Bilderfassungseinrichtung in einem anderen Spektralbereich verändert. Diese Relativänderung kann durch selektive Abschwächung des Beleuchtungs-Lichtstrahls in einzelnen Spektralbereichen oder von Licht, das von dem von der Bilderfassungseinrichtung erfassten Oberflächenbereich des Wafers herrührt, erzielt werden.

Vorteilhaft ist, dass durch Anpassen des Farbspektrums des Beleuchtungs-Lichtstrahls oder des von der Bilderfassungseinrichtung von der Oberfläche des Wafers erfassten Bildes eine gleichmäßigere Aussteuerung der Farbbildkanäle der Bilderfassungseinrichtung erzielt werden kann. Bevorzugt wird zu diesem Zweck die Intensität des Beleuchtungs-Lichtstrahls oder des von der Bilderfassungseinrichtung von der Oberfläche des Wafers erfassten Bildes in zumindest einem Spektralbereich, in welchem das von der Bilderfassungseinrichtung erfasste Farbbildsignal eine relativ geringe Amplitude aufweist, mit Hilfe einer Farbänderungseinrichtung relativ zu der entsprechenden Intensität in einem anderen Spektralbereich erhöht, so dass eine ausreichende Amplitude des erfassten Farbbildsignals erzielt wird. Selbst wenn die genaue Ursache für eine ungleichmäßige Aussteuerung der Farbbildkanäle nicht exakt bekannt ist, lässt sich erfindungsgemäß eine gleichmäßigere Aussteuerung der Farbbildkanäle durch einfaches Ausprobieren, beispielsweise an einem Referenzwafer, erzielen.

Vorteilhaft ist ferner, dass sich durch die gleichmäßigere Aussteuerung der Farbbildkanäle auch eine höhere Detektionsempfindlichkeit erzielen lässt. Insbesondere lassen sich erfindungsgemäß Signale mit einem höheren Signal-zu-Rausch-Verhältnis erzielen, was Vorteile bei der Bilderfassung und bei der anschließenden Bildauswertung bietet.

Gemäß der vorliegenden Erfindung wirkt die Farbänderungseinrichtung selektiv auf einen oder mehrere Spektralbereiche des Beleuchtungs-Lichtstrahls oder des von der Bilderfassungseinrichtung von der Oberfläche des Wafers erfassten Bildes ein, um selektiv in dem jeweiligen Spektralbereich die Intensität zu verändern und so das Farbspektrum zu verändern. Diese Änderung des Farbspektrums lässt sich durch diffraktive oder refraktive Effekte bewerkstelligen, beispielsweise mit Hilfe von Beugungsgittern, Beugungsgitteranordnungen, Prismen oder Prismenanordnungen. Ganz besonders bevorzugt wird gemäß der vorliegenden Erfindung die Intensität des Beleuchtungs-Lichtstrahls oder des reflektierten Lichtstrahls in zumindest einem Spektralbereich selektiv abgeschwächt. Eine solche Abschwächung lässt sich grundsätzlich ebenfalls mit Hilfe der vorgenannten diffraktiven oder refraktiven Effekte erzielen. Ganz besonders bevorzugt wird gemäß der vorliegenden Erfindung jedoch eine selektive spektrale Filterung des Beleuchtungs-Lichtstrahls oder des von der Bilderfassungseinrichtung von der Oberfläche des Wafers erfassten Bildes mit Hilfe eines Farbfilters, beispielsweise eines Farbglasfilters, eines Interferenzfilters oder eines dichroitischen Farbfilters.

Durch geeignete Wahl der spektralen Eigenschaften der Farbänderungseinrichtung lassen sich die Intensitäten der von der Bilderfassungseinrichtung erfassten Farbbildsignale relativ zueinander nahezu beliebig verändern. Bevorzugt wird jedoch eine Anpassung an die spektrale Empfindlichkeit der Bilderfassungseinrichtung derart, dass eine möglichst gleichmäßige Aussteuerung der Farbbildkanäle der Bilderfassungseinrichtung erzielt wird. Zu diesem Zweck kann das Farbspektrum des Beleuchtungs-Lichtstrahls oder des von der Bilderfassungseinrichtung von der Oberfläche des Wafers erfassten Bildes beispielsweise so verändert werden, dass ein Verhältnis der Intensität eines Farbbildsignals zu einer Intensität eines anderen Farbbildsignals der Bilderfassungseinrichtung um einen Faktor von mindestens etwas 1,5, bevorzugter von mindestens etwa 2,0 und noch bevorzugter von mindestens etwa 3,0 vergrößert wird. Die vorgenannten Parameterbereiche haben sich insbesondere zur Detektion von Makro-Defekten auf der Oberfläche von Siliziumwafern als besonders zweckmäßig erwiesen.

Insbesondere bei Verwendung von Temperaturstrahlern als Beleuchtungseinrichtung wurde festgestellt, dass die Farbbildsignale der Bilderfassungseinrichtung im roten Spektralbereich im Vergleich zu denjenigen im blauen Spektralbereich relativ gering sind. Besonders zweckmäßig wird deshalb gemäß der vorliegenden Erfindung die Intensität des Farbbildsignals im roten Spektralbereich durch Verändern des Farbspektrums des Beleuchtungs-Lichtstrahls oder des von der Bilderfassungseinrichtung von der Oberfläche des Wafers erfassten Bildes relativ zu der Intensität des Farbbildsignals im blauen Spektralbereich erhöht wird. Hierzu wird erfindungsgemäß der Beleuchtungs-Lichtstrahl oder das von der Bilderfassungseinrichtung von der Oberfläche des Wafers erfasste Bild im blauen Spektralbereich abgeschwächt. Weil die Beleuchtungseinrichtung eine durch die Farbtemperatur vorgegebene spektrale Verteilung aufweist, wird dabei automatisch auch die Intensität des Farbbildsignals im roten oder blauen Spektralbereich relativ zu der Intensität des Farbbildsignals im grünen Spektralbereich verändert. Selbstverständlich kann die Farbänderungseinrichtung auch auf andere Spektralbereiche des Beleuchtungs-Lichtstrahls oder des von der Bilderfassungseinrichtung von der Oberfläche des Wafers erfassten Bildes einwirken.

Grundsätzlich kann die Oberfläche des Wafers erfindungsgemäß in beliebigen Spektralbereichen inspiziert werden, beispielsweise im fernen Infraroten Spektralbereich (FIR) und/oder im nahen infraroten Spektralbereich (NIR) und/oder im sichtbaren Spektralbereich bei Wellenlängen zwischen etwa 400 und 800 nm und/oder im ultravioletten Spektralbereich. Voraussetzung ist stets, dass zur Bilderfassung Bildsensoren mit einer geeigneten Qualität und spektralen Empfindlichkeit zur Verfügung stehen und die verwendeten Wellenlängen zur Detektion von Makro-Defekten geeignet sind. Ganz besonders bevorzugt werden Wellenlängen im sichtbaren Spektralbereich verwendet, weil so kommerzielle CCD-Kameras als Bilderfassungseinrichtung verwendet werden können.

Gemäß einer ersten Ausführungsform werden Temperaturstrahler als Lichtquelle der Beleuchtungseinrichtung verwendet. Bei dieser Ausführungsform kann das Farbspektrum des Beleuchtungs-Lichtstrahls auch durch geeignete Wahl einer dichroitischen Beschichtung in einem Reflektorgehäuse der Lichtquelle verändert werden.

Ganz besonders bevorzugt umfasst die Beleuchtungseinrichtung als Temperaturstrahler ein Xenon-Blitzlicht. Dabei wird zur Inspektion von Wafern bevorzugt ein CTO-Filter (Color Temperature Orange) verwendet, der die Farbtemperatur des Beleuchtungs-Lichtstrahls beispielsweise von etwa 15000 K auf etwa 5600 K verändert.

Grundsätzlich kann es ausreichend sein, das Transmissionsvermögen des verwendeten Farbfilters einmalig festzulegen, um in Anpassung an die zu untersuchenden Wafer und deren Oberflächen das Farbspektrum des Beleuchtungs-Lichtstrahls oder des von der Bilderfassungseinrichtung von der Oberfläche des Wafers erfassten Bildes an die spektrale Empfindlichkeit der verwendeten Bilderfassungseinrichtung anzupassen. Beispielsweise kann anhand eines Referenzwafers mit bevorzugten Oberflächeneigenschaften das Transmissionsvermögen im Voraus angepasst werden.

Gemäß einer weiteren Ausführungsform kann das Transmissionsvermögen des Farbfilters auch variabel sein, beispielsweise kontinuierlich veränderbar sein, was die Wafer-Inspektionsvorrichung noch variabler macht, da auch während einzelner Messungen oder Messreihen die Detektionsempfindlichkeit noch angepasst werden kann. Zu diesem Zweck kann das Transmissionsvermögen des Farbfilters beispielsweise räumlich variieren und kann durch räumliches Verschieben des Farbfilters in dem jeweiligen Strahlengang des Beleuchtungs-Lichtstrahls oder des von der Bilderfassungseinrichtung von der Oberfläche des Wafers erfassten Bildes ein gewünschtes Transmissionsvermögen vorgegeben werden.

Gemäß einer weiteren Ausführungsform ist die Lichtquelle, beispielsweise ein Temperaturstrahler, nicht unmittelbar in der Beleuchtungseinrichtung angeordnet sondern wird das Licht der Lichtquelle in einen Lichtleiter oder ein Lichtleiterbündel eingekoppelt und an die Beleuchtungseinrichtung weitergeleitet, um von dieser abgestrahlt zu werden. Bevorzugt ist bei dieser Ausführungsform ein als Farbänderungseinrichtung dienender Filter, beispielsweise ein Farbfilter, ein Interferenzfilter oder ein dichroitischer Filter, in dem Strahlengang zwischen der Lichtquelle und der Stirnseite des Lichtleiters oder der Lichtleiter angeordnet. Bevorzugt werden der Filter und der oder die Lichtleiter gemeinsam gehalten.

Gemäß einer weiteren Ausführungsform werden anstelle eines Temperaturstrahlers als Farblichtquelle der Beleuchtungseinrichtung zumindest drei Farblichtquellen verwendet, die Beleuchtungs-Lichtstrahlen in jeweils anderen Spektralbereichen abstrahlen, beispielsweise in den drei Grundfarben rot, grün und blau. Selbstverständlich können die Farblichtquellen auch in anderen Spektralbereichen emittieren, beispielsweise im fernen infraroten Spektralbereich (FIR) und/oder im nahen infraroten Spektralbereich (NIR) und/oder im sichtbaren Spektralbereich bei Wellenlängen zwischen etwa 400 nm und etwa 800 nm und/oder im ultravioletten Spektralbereich. Bevorzugt sind die Farblichtquellen Lichtquellen, die jeweils im Wesentlichen nur bei einer Wellenlänge emittieren. Besonders bevorzugt werden LEDs oder Laserdioden verwendet, die bei jeweils unterschiedlichen Wellenlängen emittieren.

Durch Ändern der jeweiligen Treiberstromstärke kann bei dieser Ausführungsform in vorteilhaft einfacher Weise die Intensität des jeweiligen Beleuchtungs-Lichtstrahls variiert werden, so dass das Farbspektrum des Beleuchtungs-Lichtstrahls und somit auch des von der Bilderfassungseinrichtung von der Oberfläche des Wafers erfassten Bildes an die spektrale Empfindlichkeit der Bilderfassungseinrichtung angepasst werden kann. Insgesamt kann so eine gleichmäßigere Aussteuerung der Farbbildkanäle der Bilderfassungseinrichtung erzielt werden. Zum Ändern der Treiberstromstärken kann bei dieser Ausführungsform eine gemeinsame Steuereinheit vorgesehen sein.

Bevorzugt ist die Steuereinheit über eine Datenverbindung mit der die Bilddaten der Bilderfassungseinrichtung auslesenden Datenausleseeinrichtung verbunden. Die Datenausleseeinrichtung, beispielsweise ein Computer, auf dem die von der Bilderfassungseinrichtung ausgelesenen Farbbildsignale dargestellt oder angezeigt werden, kann dazu verwendet werden, um die jeweilige Treiberstromstärken der Farblichtquellen so anzupassen, dass eine gleichmäßigere Aussteuerung der Farbbildkanäle erzielt werden kann. Auf diese Weise lässt sich auch in einfacher Weise eine Regel- oder Steuerschleife realisieren, um die jeweilige Treiberstromstärken der Farblichtquellen automatisch so anzupassen, dass eine gleichmäßigere Aussteuerung der Farbbildkanäle erzielt werden kann.

Als Bilderfassungseinrichtung wird bevorzugt eine CCD-Kamera verwendet, die einen CCD-Bildsensor oder eine Mehrzahl von CCD-Bildsensoren aufweist, die jeweils einer zu detektierenden Spektralfarbe zugeordnet sind.

Gemäß einem weiteren Gesichtspunkt der vorliegenden Erfindung wird auch ein Verfahren zur Inspektion eines Wafers bereitgestellt, bei dem zumindest eine Beleuchtungseinrichtung einen Beleuchtungs-Lichtstrahl auf eine Oberfläche des Wafers abstrahlt und eine Bilderfassungseinrichtung, die eine vorgegebene spektrale Empfindlichkeit aufweist, ein Bild von einem beleuchteten Bereich auf der Oberfläche des Wafers in einer Mehrzahl von Spektralbereichen erfasst, wobei das Farbspektrum des Beleuchtungs-Lichtstrahls oder des von der Bilderfassungseinrichtung von der Oberfläche des Wafers erfassten Bildes so verändert wird, dass das Farbspektrum des Beleuchtungs-Lichtstrahls oder des von der Oberfläche des Wafers aufgenommenen Bildes an die spektrale Empfindlichkeit der Bilderfassungseinrichtung angepasst wird.

Bei diesem Verfahren kann die Intensität eines Farbbildsignals der Bilderfassungseinrichtung in einem Spektralbereich relativ zu der Intensität eines anderen Farbbildsignals der Bilderfassungseinrichtung in einem anderen Spektralbereich erhöht werden.

Das Verfahren wird bevorzugt automatisch in der vorstehend im Zusammenhang mit der entsprechenden Vorrichtung beschriebenen Weise durchgeführt, zu welchem Zweck gemäß der vorliegenden Erfindung auch ein geeignetes Steuerprogramm in Form einer Software oder eines Software-Programms bereitgestellt wird.

Nachfolgend wird die Erfindung in beispielhafter Weise und unter Bezugnahme auf die beigefügten Zeichnungen beschrieben werden, woraus sich weitere Merkmale, Aufgaben und Vorteile gemäß der vorliegenden Erfindung ergeben werden. Es zeigen:
- Fig. 1: eine erste Ausführungsform einer Wafer-Inspektionsvorrichtung gemäß der vorliegenden Erfindung, mit Detektion in einer Hellfeld-Anordnung;
- Fig. 2: eine zweite Ausführungsform einer Wafer-Inspektionsvorrichtung gemäß der vorliegenden Erfindung, mit Detektion in einer Dunkelfeld-Anordnung;
- Fig. 3: eine dritte Ausführungsform einer Wafer-Inspektionsvorrichtung gemäß der vorliegenden Erfindung mit Detektion in einer Hellfeld-Anordnung;
- Fig. 4: in einer vergrösserten Ansicht die Einkopplung von Licht einer Lichtquelle in ein Lichtleiterbündel, wie sie bei der ersten bis dritten Ausführungsform verwendet werden kann;
- Fig. 5a: eine schematische Darstellung der spektralen Empfindlichkeit einer CCD-Kamera und der spektralen Verteilung eines Temperaturstrahlers vor und nach einer Veränderung des Farbspektrums gemäß der vorliegenden Erfindung; und
- Fig. 5b: die Intensitäten von Farbbildsignalen der CCD-Kamera vor und nach einer Änderung des Farbspektrums gemäß der vorliegenden Erfindung.

In den Figuren bezeichnen identische Bezugszeichen identische oder im Wesentlichen gleich wirkende Elemente oder Funktionsgruppen.

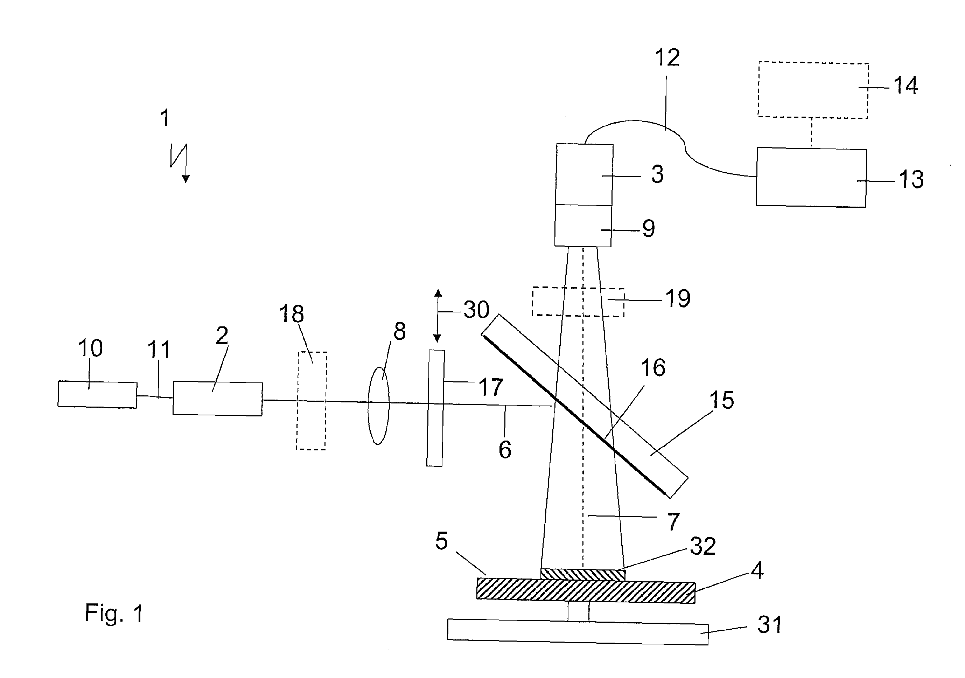

Die Fig. 1 zeigt eine erste Ausführungsform einer Wafer-Inspektionsvorrichtung gemäß der vorliegenden Erfindung. Die Wafer-Inspektionsvorrichtung 1 umfasst eine Beleuchtungseinrichtung 2 und eine als Bilderfassungseinrichtung dienende CCD-Kamera 3. Die Beleuchtungseinrichtung 2 strahlt entlang der Beleuchtungsachse 6 einen Beleuchtungs-Lichtstrahl ab, der von dem teildurchlässigen Spiegel 15 auf die Oberfläche 5 des Wafers 4 reflektiert wird. Der Beleuchtungs-Lichtstrahl kann die gesamte Oberfläche 5 oder einen Teil derselben beleuchteten. Das in dem beleuchteten Bereich 32 auf der Oberfläche 5 des Wafers 4 reflektierte Licht wird entlang der Abbildungsachse 7 in die CCD-Kamera 3 reflektiert und durchläuft dabei den teildurchlässigen Spiegel 15. Eine der CCD-Kamera 3 zugeordnete Abbildungsoptik, beispielsweise ein Objektiv, bildet den reflektierten Lichtstrahl auf die CCD- Kamera 3 ab. Die CCD-Kamera 3 generiert ein Farbbild von dem beleuchteten Bereich 32 auf der Oberfläche 5 des Wafers 4. Die Kamera 3 ist über die Datenleitung 12 mit einem als Datenausleseeinrichtung dienenden Frame-Grabber (nicht dargestellt) und einem Computer 13 verbunden, welcher die Farbbildsignale der CCD-Kamera 3 ausliest. Die ausgelesenen Farbbildsignale werden, gegebenenfalls nach geeigneter Bildverarbeitung mit Hilfe von Software, auf einem Monitor 14 dargestellt und weiter ausgewertet.

Wie in der Fig. 1 gezeigt, ist der Beleuchtungseinrichtung 2 eine Lichtquelle 10 zugeordnet, deren Licht über das Lichtleiterbündel 11 eingekoppelt wird. Der von der Beleuchtungseinrichtung 2 abgestrahlte Beleuchtungs-Lichtstrahl wird mit Hilfe der Abbildungsoptik 8, beispielsweise einer Linse oder einem Linsensystem, auf die Oberfläche 5 des Wafers 4 abgebildet.

Bei der in der Fig. 1 gezeigten Anordnung wird das von der Oberfläche 5 des Wafers 4 reflektierte Beleuchtungs-Licht direkt in die CCD-Kamera 3 reflektiert. Die Wafer-Inspektionsvorrichtung 1 detektiert somit gemäß der Fig. 1 Makro-Defekte auf der Oberfläche 5 des Wafers 4 in einer Hellfeld-Anordnung.

Die Beleuchtungseinrichtung 2 strahlt Licht in einem sichtbaren Spektralbereich ab. Das reflektierte Licht wird von der CCD-Kamera 3 spektral aufgelöst detektiert. In dem jeweiligen Spektralbereich liefert die CCD-Kamera nach der Bildaufnahme integrale Werte.

Die CCD-Kamera 3 erfasst das reflektierte Licht in drei oder vier verschiedenen Spektralbereichen. CCD-Kameras mit drei Spektralbereichen verwenden in der Regel RGB-Primärvalenzen zur Erfassung der Signale. Bei CCD-Kameras mit vier verschiedenen Filtern werden Komplementärfarbfilter bevorzugt. Diese Filter können auf der CCD-Matrix in verschiedener Art und Weise angeordnet sein. Matrizen mit Komplementärfarbfilter sind üblicherweise so ausgelegt, dass sich daraus sehr einfach ein YCrCb-Signal berechnen lässt, das für die Erzeugung eines TV-kompatiblen Bildes benötigt wird. RGB-Matrizen zielen hingegen auf die Signalverarbeitung und Darstellung auf einem Computermonitor ab.

Die spektrale Auflösung kann in der CCD-Kamera 3 in bekannter Weise durch örtliche Signaltrennung, durch zeitliche Signaltrennung oder durch optische Signaltrennung bewerkstelligt werden. Bei 1-Chip-Kameras ist einem nicht dargestellten CCD-Sensor der CCD-Kamera 3 eine RGB-Filtermaske vorgeschaltet, die nur Strahlung bestimmter Wellenlängen an den CCD-Sensor durchlässt. Die gängigste Filterart ist ein Mosaikfilter, bei dem vier benachbarte CCD-Sensoren mit einer räumlich zugeordneten Filteranordnung ein Farbpixel generieren. Bevorzugt wird gemäß der vorliegenden Erfindung eine 3-Chip-Kamera verwendet, bei der anstelle eines Farbfilters vor einem CCD-Sensor ein System von Prismen zur Strahlteilung und räumlichen Strahltrennung verwendet wird. Die einfallende Lichtstrahlung wird durch die Prismen spektral zerlegt und die drei resultierenden, spektral getrennten Lichtstrahlen dann auf drei räumlich getrennte CCD-Sensoren der CCD-Kamera 3 abgebildet.

Die CCD-Sensoren der CCD-Kamera 3 erfassen Farbbildsignale in einem jeweiligen Spektralbereich. Die Intensität der erfassten Farbbildsignale kann beispielsweise aus einem der nachfolgenden Gründen unterschiedlich sein: die Beleuchtungseinrichtung 2 hat ein nicht an die spektrale Empfindlichkeit der CCD-Kamera 3 oder der CCD-Sensoren angepasstes Farbspektrum, die spektrale Empfindlichkeit der CCD-Sensoren kann in den Spektralbereichen unterschiedlich sein; das Reflexionsvermögen des zu inspizierenden Wafers 4 kann in den Spektralbereichen unterschiedlich sein; oder optische Elemente in dem Strahlengang des einfallenden Beleuchtungs-Lichtstrahls oder des reflektierten Lichtstrahls können ein spektral unterschiedliches Transmissionoder Reflexionsvermögen aufweisen, was die spektrale Verteilung des detektierten Lichts beeinflusst.

Aufgrund der unterschiedlichen Intensitäten der Farbbildsignale sind die Farbbildkanäle der CCD-Kamera 3 unterschiedlich ausgesteuert, was in den verschiedenen Farbbildkanälen zu einer Übersteuerung oder zu unterschiedlichen Signal-zu-Rausch-Verhältnissen führt. Ein niedriges Signal-zu-Rausch-Verhältnis kann die Genauigkeit der Bilderfassung und Bildauswertung beeinträchtigen.

Um dieses Problem zu beheben, umfasst die erfindungsgemäße Wafer-Inspektionsvorrichtung 1 einen als Farbänderungseinrichtung dienenden Farbfilter 17, der entweder in dem Strahlengang des Beleuchtungs-Lichtstrahls von der CCD-Kamera 3 zu der Oberfläche 5 des Wafers 4 angeordnet ist oder in dem Strahlengang des von der Oberfläche 5 des Wafers 4 reflektierten, gestreuten oder gebeugten Lichtstrahls zu der CCD-Kamera 3. Die verschiedenen möglichen Positionen des Farbfilters 17 sind in der Fig. 1 durch die mit gestrichelten Linien angedeuteten Positionen 18 und 19 angedeutet.

Alternativ oder zusätzlich kann die Oberfläche des teildurchlässigen Spiegels 15 auch eine als Farbänderungseinrichtung dienende dichroitische Beschichtung 16 aufweisen, sodass der Beleuchtungs-Lichtstrahl und/oder das von der Oberfläche 5 des Wafers 4 reflektierte, gestreute oder gebeugte Licht spektral unterschiedlich reflektiert bzw. transmittiert wird.

Durch den Farbfilter 17 und/oder die dichroitische Beschichtung 16 auf der Oberfläche des teildurchlässigen Spiegels 15 wird gemäß der vorliegenden Erfindung das Farbspektrum des Beleuchtungs-Lichtstrahls oder des von der CCD-Kamera 3 von der Oberfläche 5 des Wafers 4 erfassten Bildes so verändert, dass das Farbspektrum des Beleuchtungs-Lichtstrahls oder des von der CCD-Kamera 3 von der Oberfläche 5 des Wafers 4 erfassten Bildes besser an die spektrale Empfindlichkeit der CCD-Kamera 3 bzw. deren CCD-Sensoren angepasst ist. Auf diese Weise können insbesondere die Farbbildkanäle der CCD-Kamera 3 gleichmäßiger ausgesteuert werden. Dies führt zu gleichmäßigeren Signal-zu-Rausch-Verhältnissen in den Farbbildkanälen der CCD-Kamera 3, so dass die von der CCD-Kamera 3 erfassten Farbbildsignale einheitlicher und geeigneter weiterverarbeitet und ausgewertet werden können. Insbesondere kann ein und derselbe Verstärker zur Verstärkung sämtlicher Farbbildsignale verwendet werden, ohne dass unterschiedliche Verstärkungsfaktoren für die verschiedenen Farbbildkanäle verwendet werden müssten.

Der Farbfilter 17 und/oder die dichroitische Beschichtung 16 kann das Farbspektrum des Beleuchtungs-Lichtstrahls und/oder des von der CCD-Kamera 3 von der Oberfläche 5 des Wafers 4 erfassten Bildes so verändern, dass die Verhältnisse der Intensitäten der Farbbildsignale der CCD-Kamera 3 geeignet verändert werden, um eine gleichmäßigere Aussteuerung der Farbbildkanäle der CCD-Kamera 3 zu erzielen.

Bei einer bevorzugten Ausführungsform wird die Intensität eines Farbbildsignals der CCD-Kamera 3 in einem roten Spektralbereich relativ zu der Intensität eines Farbbildsignals der CCD-Kamera 3 in einem blauen Spektralbereich erhöht, so dass die Farbbildkanäle der CCD-Kamera 3 im Wesentlichen gleichmäßig ausgesteuert sind. Weil das Farbspektrum der Beleuchtungseinrichtung 2 konstant ist, wird somit automatisch auch das Verhältnis der Intensitäten der Farbbildsignale der CCD-Kamera in dem roten oder blauen Spektralbereich zu der Intensität des Farbbildsignals in dem grünen Spektralbereich verändert.

In der Anordnung gemäß der Fig. 1 wird als Beleuchtungseinrichtung 2 bevorzugt eine Xenon-Blitzlampe als Lichtquelle 10 verwendet. Bevorzugt werden gemäß der vorliegenden Erfindung Xenonlampen verwendet, deren Farbspektrum im sichtbaren Spektralbereich zwischen 380 und 780 nm sehr gut dem spektralen Verlauf eines schwarzen Strahlers mit einer Farbtemperatur von etwa 15000 K folgt. Um das Spektrum einer Xenon-Blitzlampe an die spektrale Empfindlichkeit von handelsüblichen CCD-Kameras und an das spektrale Reflektionsvermögen von Si-Wafern anzupassen, wird bevorzugt ein 1/2-CTO-Filter (Color Temperature Orange) verwendet, der die Farbtemperatur des einfallenden Beleuchtungs-Lichtstrahls der Xenon-Blitzlampe oder des von der CCD-Kamera 3 von der Oberfläche 5 des Wafers 4 erfassten Bildes auf eine Farbtemperatur von etwa 5600 K verändert.

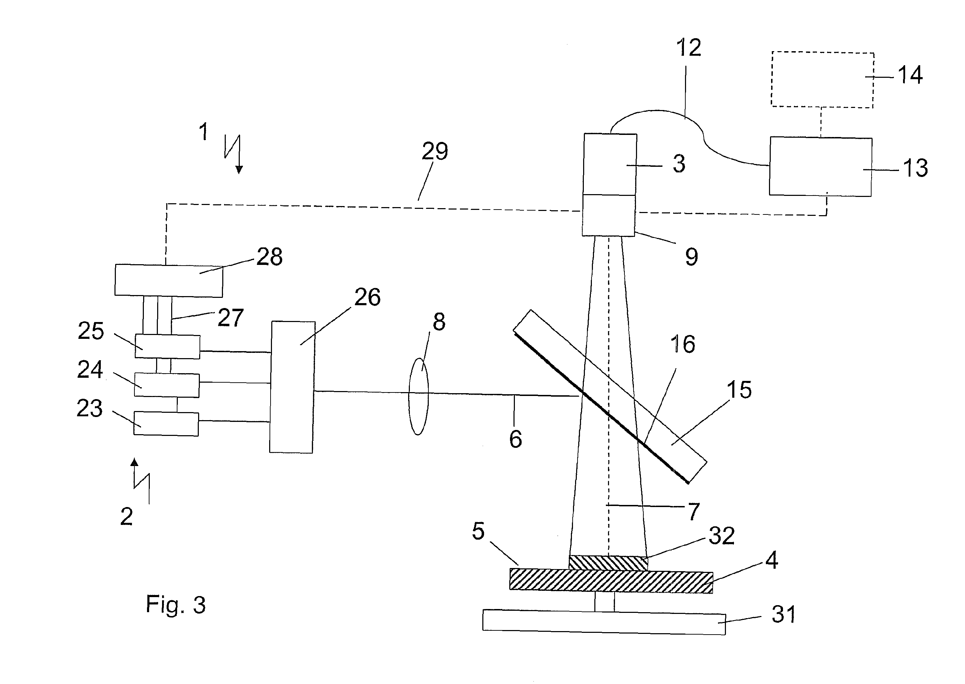

Selbstverständlich kann die Lichtquelle 10 auch eine monochromatische oder polychromatische Lichtquelle sein, wie nachfolgend beispielhaft anhand der Fig. 3 beschrieben.

Der Farbfilter 17 kann statisch in dem Strahlengang angeordnet sein, in welchem Fall das Transmissionsvermögen des Farbfilters 17 in den verschiedenen Spektralbereichen im Voraus, beispielsweise anhand des spektralen Reflexionsvermögens eines Referenzwafers, festgelegt wird. Das Transmissionsvermögen des Farbfilters 17 kann auch entlang einer Raumrichtung kontinuierlich oder gestuft zunehmen, so dass durch räumliche Verschiebung des Farbfilters 17 relativ zu dem Strahlengang des Beleuchtungs-Lichtstrahls oder des von der Oberfläche 5 des Wafers reflektierten, gestreuten oder gebeugten Lichts das Farbspektrum des Beleuchtungs-Lichtstrahls oder des von der Oberfläche 5 des Wafers reflektierten, gestreuten oder gebeugten Lichts geeignet verändert werden kann. Beispielsweise kann der Farbfilter 17 rechteckförmig sein, wobei das Transmissionsvermögen entlang einer Längsseite des Farbfilters 17 zunimmt. Oder der Farbfilter 17 kann kreisrund sein, wobei das Transmissionsvermögen entlang der Umfangsrichtung des Farbfilters 17 zunimmt. Wie durch den Doppelpfeil 30 angedeutet, kann ein solcher Farbfilter 17 mit sich örtlich änderndem Transmissionsvermögen in dem Strahlengang des Beleuchtungs-Lichtstrahls oder des von der Oberfläche 5 des Wafers 4 reflektierten, gestreuten oder gebeugten Lichts verfahren oder verstellt werden, bis eine Stellung des Farbfilters 17 gefunden ist, in welcher die Farbbildkanäle der CCD-Kamera 3 gleichmäßiger ausgesteuert werden und eine Anpassung an die spektrale Empfindlichkeit der CCD-Kamera erzielt ist.

Die Aussteuerung der Farbbildkanäle der CCD-Kamera 3 wird mit Hilfe des als Datenausleseeinrichtung dienenden Frame-Grabbers und eines Computers 13 festgestellt und ausgewertet. Anhand der von dem Computer ausgelesenen Farbbildsignale kann das Transmissionsvermögen des Farbfilters 17, 18 und/oder 19 solange durch automatisches Verfahren oder Verstellen desselben verändert werden, bis ein geeignetes Transmissionsvermögen gefunden ist, bei dem die Farbbildkanäle der CCD-Kamera 3 im Wesentlichen gleichmäßig ausgesteuert sind und eine Anpassung an die spektrale Empfindlichkeit der CCD-Kamera 3 erzielt ist.

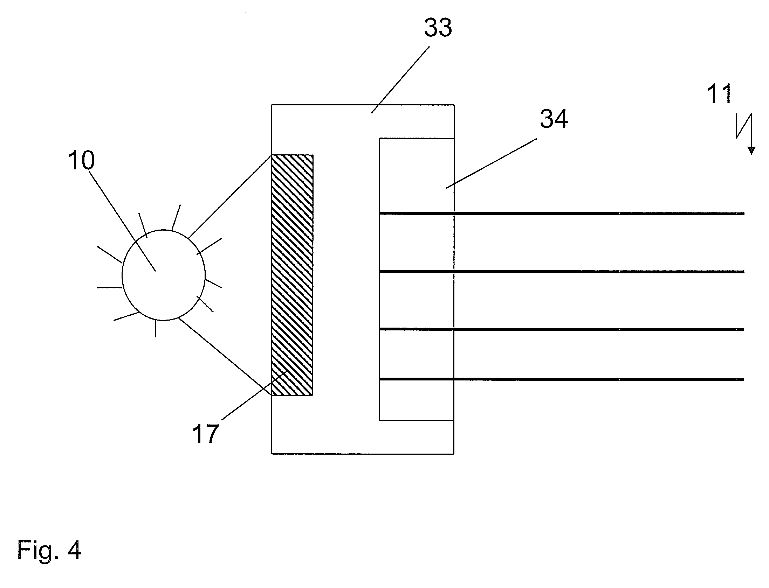

Die Fig. 4 zeigt in einer vergrösserten Ansicht die Einkopplung von Licht einer Lichtquelle 10 in ein Lichtleiterbündel 11, wie sie bei den Ausführungsformen gemäß den Fig. 1 bis 3 verwendet werden kann. Die Lichtquelle 10 kann ein Temperaturstrahler, eine LED oder LED-Zeilenanordnung oder eine Laserdiode oder eine Laserdioden-Zeilenanordnung sein. Das von der Lichtquelle 10 abgestrahlte Licht wird in die Lichtleiter des Lichtleiterbündels 11 eingekoppelt. Die Enden der Lichtleiter sind in einer Aufnahme 34 aufgenommen, die mechanisch stabil in einer Halterung 33 gehalten sind. Am vorderen Ende der Halterung 33, im Strahlengang zwischen der Lichtquelle 10 und den Faserenden des Lichtleiterbündels 11, befindet sich ein als Farbänderungseinrichtung dienender Farbfilter 17. Wenngleich nicht dargestellt, können in dem Strahlengang zwischen der Lichtquelle 10 und dem Lichtleiterbündel 11 auch weitere optische Elemente angeordnet sein, beispielsweise eine Einkopplungsoptik, Linsen oder eine Streuscheibe zur Homogenisierung des Beleuchtungs-Lichtstrahls. Die so ausgebildete Faseroptik kann auch als Faser-Flächenstrahler ausgebildet sein.

Wie in der Fig. 1 gezeigt, ist der Wafer 4 auf einer Wafer-Aufnahmeeinrichtung 31 statisch oder drehbar gehalten. Die Orientierung des Wafers 4 auf der Wafer-Aufnahmeeinrichtung 31 kann durch Detektion einer auf dem Umfangsrand des Wafers 4 vorgesehenen Markierung, beispielsweise eines Wafer-Notches oder Flats, festgestellt werden. Der Wafer-Inspektionsvorrichtung 1 kann auch ein nicht dargestellter Prealigner zugeordnet sein, der den Wafer 4 in einer vorgebbaren Orientierung an die Wafer-Aufnahmeeinrichtung 31 übergibt. Somit kann die Lage von Makro-Defekten auf der Oberfläche 5 des Wafers 4 erfindungsgemäß auch ortsaufgelöst detektiert werden.

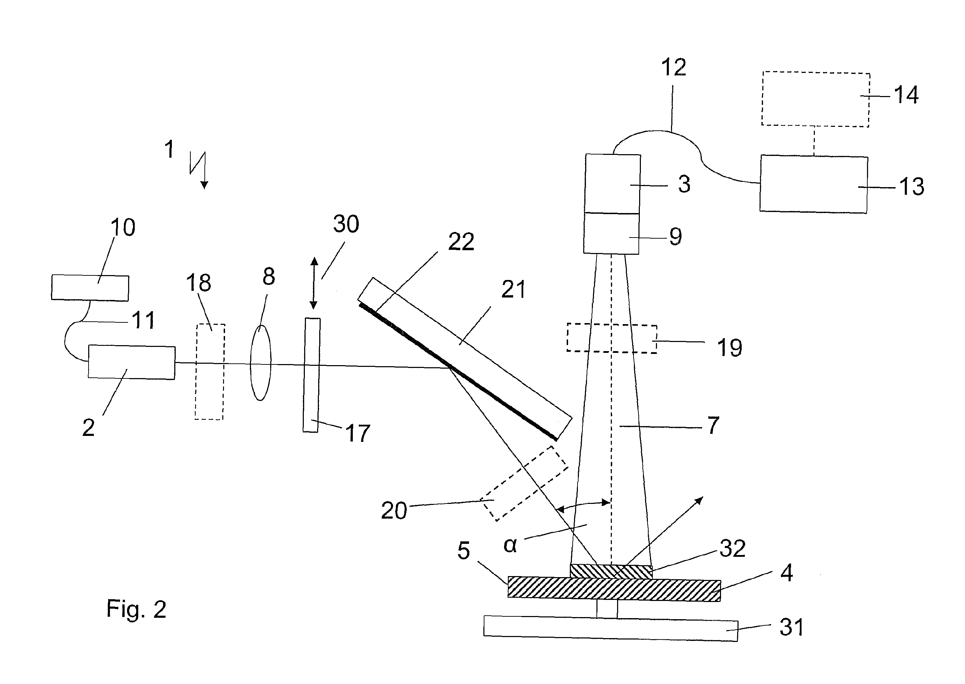

Die Fig. 2 zeigt eine zweite Ausführungsform einer Wafer-Inspektionsvorrichtung 1 gemäß der vorliegenden Erfindung mit Detektion in einer Dunkelfeld-Anordnung. Wie in der Fig. 2 gezeigt, wird der von der Beleuchtungseinrichtung 2 abgestrahlte Beleuchtungs-Lichtstrahl mit Hilfe eines Spiegels 21 umgelenkt und fällt unter einem Einfallswinkel (alpha) auf die Oberfläche 5 des Wafers 4 ein. Der von dem beleuchteten Bereich 32 reflektierte Beleuchtungs-Lichtstrahl wird nicht in die CCD-Kamera 3 abgebildet. Vielmehr wird nur Streulicht oder gebeugtes Licht, das beispielsweise auch von Makro-Defekten auf der Oberfläche 5 des Wafers 4 in dem beleuchteten Bereich 32 herrühren kann, in die CCD-Kamera 3 abgebildet.

Wie in der Fig. 2 gezeigt, ist in dem Strahlengang des Beleuchtungs-Lichtstrahls nach der Abbildungsoptik 8 ein als Farbänderungseinrichtung dienender Farbfilter 17 angeordnet, der das Farbspektrum des Beleuchtungs-Lichtstrahls verändert. Wie durch die gestrichelten Linien 18, 19 und 20 in der Fig. 2 angedeutet, kann der Farbfilter 17 auch vor der Abbildungsoptik 8, zwischen dem Spiegel 21 und der Oberfläche 5 des Wafers 4 oder in dem Strahlengang zwischen der Oberfläche 5 des Wafers 4 und der CCD-Kamera 3 angeordnet sein. Auf der Oberfläche 22 des Spiegels 21 kann in der im Zusammenhang mit der Fig. 1 beschriebenen Weise auch eine dichroitische Beschichtung vorgesehen sein, um das Farbspektrum des einfallenden Beleuchtungs-Lichtstrahls bei Reflektion an dem Spiegel 21 zu verändern.

Selbstverständlich kann der Einfallswinkel (alpha) mit Hilfe eines nicht dargestellten -Verstellmechanismus auch verändert werden. Wie in den Figuren 1 und 2 dargestellt, steht die Abbildungsachse 7 der CCD-Kamera 7 im Wesentlichen senkrecht auf der Oberfläche 5 des Wafers 4. Zweckmäßig überlappt das Bildfeld der CCD-Kamera 3 im Wesentlichen vollständig mit dem beleuchteten Bereich 32 auf der Oberfläche 5 des Wafers 4.

Gemäß den Figuren 1 und 2 spannen die Beleuchtungsachse 6 und die Normale auf die Oberfläche 5 des Wafers 4 eine Ebene auf, in der die Abbildungsachse 7 liegt. Wenngleich diese Anordnung besonders zweckmäßig zur Justierung der Wafer-Inspektionsvorrichtung 1 ist, kann die CCD-Kamera 3 selbstverständlich auch so aus der Zeichenebene der Figuren 1 und 2 herausgeschwenkt sein, dass die Abbildungsachse 7 nicht mehr in der von der Beleuchtungsachse 6 und der Normalen auf die Oberfläche 5 des Wafers 4 aufgespannten Ebene liegt.

Die Fig. 3 zeigt eine weitere Ausführungsform einer Wafer-Inspektionsvorrichtung 1 gemäß der vorliegenden Erfindung mit Detektion in einer Hellfeld-Anordnung. Gemäß der Fig. 3 umfasst die Beleuchtungseinrichtung 2 drei LEDs 23 bis 25, die Beleuchtungs-Lichtrahlen in drei unterschiedlichen Spektralbereichen abstrahlen, bevorzugt in einem roten, grünen und blauen Spektralbereich. Die von den LEDs 23 bis 25 abgestrahlten Beleuchtungs-Lichtstrahlen werden in der Strahlüberlagerungseinrichtung 26, beispielsweise einer Prismenanordnung, überlagert und anschließend in der im Zusammenhang mit der Fig. 1 beschriebenen Weise auf die Oberfläche 5 des Wafers 4 abgebildet.

Die LEDs 23 bis 25 sind über Verbindungsleitungen 27 mit einer Steuereinheit 28 verbunden, welche die LEDs 23 bis 25 ansteuert. Durch Verändern des LED-Treiberstroms kann die Intensität einer jeweiligen LED 23 bis 25 geeignet eingestellt und nahezu beliebig erhöht oder verkleinert werden. Die Kennlinien der LEDs können in einem nicht dargestellten Speicher der Steuereinheit 28 abgespeichert sein.

Wie durch die gestrichelte Linie angedeutet, ist die Steuereinheit 28 über eine Datenverbindungsleitung 29 mit dem als Datenausleseeinrichtung dienenden Computer 13 verbunden, welcher die Farbbildsignale der CCD-Kamera 3 ausliest und auswertet. Aus den Farbbildsignalen kann der Computer 13 Steuersignale erzeugen, die der Steuereinheit 28 eingegeben werden, um die Intensität der von den LEDs 23 bis 25 abgestrahlten Beleuchtungs-Lichtstrahlen so individuell einzustellen, dass eine Anpassung des Farbspektrums der Beleuchtungs-Lichtstrahlen oder des von der CCD-Kamera 3 von der Oberfläche 5 des Wafers 4 erfassten Bildes erzielt werden kann und die Farbbildkanäle der CCD-Kamera 3 im Wesentlichen gleichmäßig ausgesteuert werden. Die individuelle Anpassung der Intensität der von den LEDs 23 bis 25 abgestrahlten Beleuchtungs-Lichtstrahlen kann auch im Voraus anhand eines Referenzwafers mit definiertem Reflektionsvermögen vorgenommen werden.

Der Computer 13 und die Steuereinheit 28 können auch eine Regelschleife bilden, um die Intensität der von den LEDs 23 bis 25 abgestrahlten Beleuchtungs-Lichtstrahlen so zu regeln, dass die Farbbildkanäle der CCD-Kamera 3 im Wesentlichen gleichmäßig ausgesteuert werden.

Wenngleich im Zusammenhang mit der Fig. 3 die Verwendung von LEDs beschrieben wurde, können als Farblichtquellen 23 bis 25 auch andere Emitter verwendet werden, beispielsweise Laser oder Licht emittierende Kunststoffe, die in unterschiedlichen Spektralbereichen emittieren. Selbstverständlich kann bei der Wafer-Inspektionsvorrichtung gemäß der Fig. 3 auch eine Dunkelfeld-Anordnung, wie sie im Zusammenhang mit der Fig. 2 beschrieben wurde, eingesetzt werden.

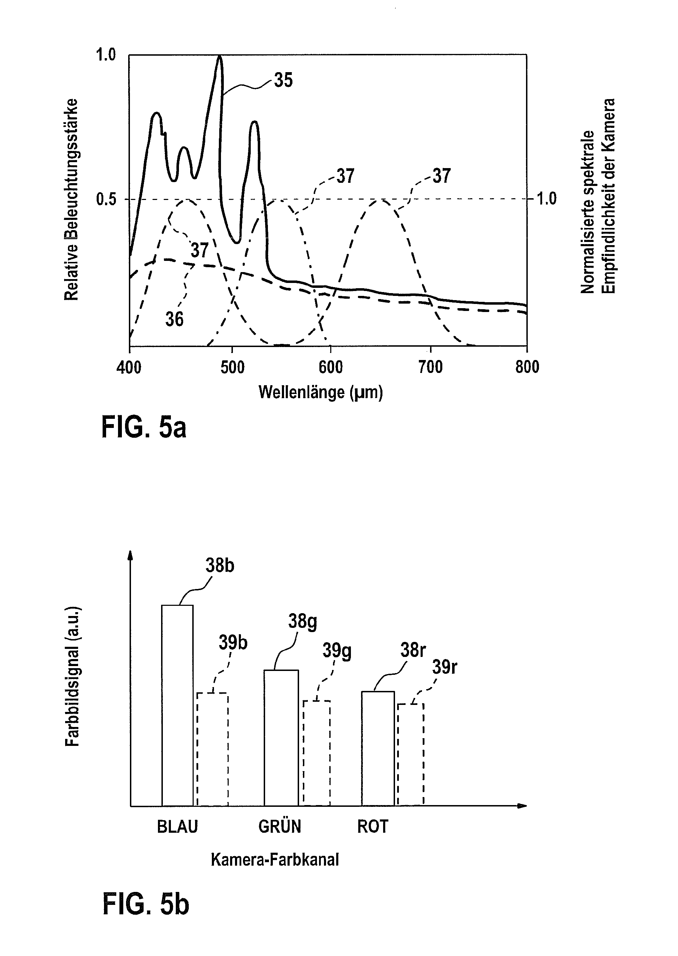

Die Fig. 5a zeigt eine schematische Darstellung der spektralen Empfindlichkeit einer CCD-Kamera und der spektralen Verteilung eines Temperaturstrahlers vor und nach einer Veränderung des Farbspektrums gemäß der vorliegenden Erfindung. Die mit den Bezugszeichen 37 bezeichneten in etwa gaußförmigen Kurven bezeichnen die spektrale Empfindlichkeit von CCD-Farbbildsensoren im blauen, grünen und roten Spektralbereich. Wie in der Fig. 5a dargestellt, haben die CCD-Farbbildsensoren bei dem dargestellten Ausführungsbeispiel in etwa dieselbe spektrale Empfindlichkeit.

Die mit dem Bezugszeichen 35 bezeichnete Kurve bezeichnet das Spektrum einer Xenon-Blitzlichtlampe im sichtbaren Spektralbereich zwischen 400 nm und 800 nm. Die mit dem Bezugszeichen 36 bezeichnete Kurve bezeichnet schließlich das Spektrum der Xenon-Blitzlichtlampe, nachdem ein als Farbänderungseinrichtung dienender Farbfilter in den Strahlengang des Beleuchtungs-Lichtstrahls eingeführt wurde. Wie in der Fig. 5a dargestellt, schwächt der Farbfilter den Beleuchtungs-Lichtstrahl im blauen Spektralbereich ab, während der Beleuchtungs-Lichtstrahl in den übrigen sichtbaren Spektralbereichen im Wesentlichen nicht abgeschwächt wird. Auf diese Weise lässt sich eine wesentlich gleichmäßigere spektrale Verteilung des Beleuchtungs-Lichtstrahls erzielen.

Die Fig. 5b zeigt die Intensitäten von Farbbildsignalen der CCD-Kamera vor und nach einer Änderung des Farbspektrums gemäß der vorliegenden Erfindung. Die mit durchgezogenen Linien dargestellten Balken 38b, 38g und 38r bezeichnen die Intensitäten der Farbbildsignale im blauen, grünen und roten Spektralbereich für einen Beleuchtungs-Lichtstrahl mit der spektralen Verteilung der Kurve 35 gemäß der Fig. 5a. Die mit gestrichelten Linien dargestellten Balken 39b, 39g und 39r bezeichnen die Intensitäten der Farbbildsignale im blauen, grünen und roten Spektralbereich für einen Beleuchtungs-Lichtstrahl mit der spektralen Verteilung der Kurve 36 gemäß der Fig. 5a, nachdem ein als Farbänderungseinrichtung dienender Farbfilter in den Strahlengang des Beleuchtungs-Lichtstrahls eingeführt wurde.

Wie in der Fig. 5b gezeigt, bleibt die Intensität des roten Farbbildsignals nahezu unverändert. Durch den Farbfilter werden jedoch die Intensitäten des grünen und blauen Farbbildsignals relativ zu der Intensität des roten Farbbildsignals abgeschwächt. Nach Einführen des Farbfilters sind die Intensitäten der Farbbildsignale im Wesentlichen gleich verteilt.

Wie dem Fachmann auf diesem Gebiet beim Studium der vorstehenden Beschreibung ersichtlich sein wird, kann die erfindungsgemäße Wafer-Inspektionsvorrichtung von einem Programm gesteuert werden, das auf einem Computer oder einer anderen geeigneten Datenverarbeitungseinrichtung, beispielsweise auf einem Mikroprozessor, abläuft. Das Programm kann auf einem Datenträger abgespeichert sein, beispielsweise auf einer Diskette, einer magnetischen oder optischen Platte oder auf einem nicht-flüchtigen Speicherbaustein, um zum Ausführen des erfindungsgemäßen Verfahrens in den Arbeitsspeicher der Datenverarbeitungseinrichtung geladen zu werden.

Die erfindungsgemäße Wafer-Inspektionsvorrichtung eignet sich zur Detektion von Makro-Defekten verschiedenster Art, beispielsweise von Partikeln, Vorsprüngen, Vertiefungen oder Verzerrungen auf der Oberfläche von Wafern. Aus der Farbverteilung des detektierten Reflexions- oder Streulichts kann auch auf Unregelmäßigkeiten in der Oberflächenbeschichtung von Wafern, beispielsweise von dielektrischen Beschichtungen, Metallisierungen oder Photolackschichten, geschlossen werden.

## Patentansprüche

1. Vorrichtung zur Inspektion eines Wafers (4), mit zumindest einer Beleuchtungseinrichtung (2), die einen Beleuchtungs-Lichtstrahl (6) auf eine Oberfläche (5) des Wafers (4) abstrahlt, und einer Bilderfassungseinrichtung (3), die eine vorgegebene spektrale Empfindlichkeit aufweist und ein Bild von einem beleuchteten Bereich (32) auf der Oberfläche (5) des Wafers (4) in einer Mehrzahl von Spektralbereichen erfasst, wobei eine Farbänderungseinrichtung (17-20; 28) vorgesehen ist, um das Farbspektrum des Beleuchtungs-Lichtstrahls oder des von der Oberfläche (5) des Wafers (4) aufgenommenen Bildes zu verändern, **dadurch gekennzeichnet, dass** die Färbänderungseinrichtung (17-20; 28) derart ausgelegt ist, dass das Farbspektrum des Beleuchtungs-Lichtstrahls (6) oder des von der Oberfläche (5) des Wafers (4) aufgenommenen Bildes an die spektrale Empfindlichkeit der Bilderfassungseinrichtung (2) anpassbar ist.

2. Vorrichtung nach Anspruch 1, **dadurch gekennzeichnet, dass** zum Anpassen des Farbspektrums des Beleuchtungs-Lichtstrahls (6) oder des von der Oberfläche (5) des Wafers (4) aufgenommenen Bildes an die spektrale Empfindlichkeit der Bilderfassungseinrichtung (2) die Intensität eines Farbbildsignals der Bilderfassungseinrichtung in einem Spektralbereich durch Verändern des Farbspektrums des Beleuchtungs-Lichtstrahls oder des von der Oberfläche (5) des Wafers (4) aufgenommenen Bildes relativ zu der Intensität eines anderen Farbbildsignals der Bilderfassungseinrichtung (2) in einem anderen Spektralbereich veränderbar ist.

3. Vorrichtung nach Anspruch 1, bei der die Farbänderungseinrichtung (17-20; 28) derart ausgelegt ist, dass die Intensität eines Farbbildsignals in einem roten Spektralbereich durch Verändern des Farbspektrums des Beleuchtungs-Lichtstrahls oder des von der Oberfläche (5) des Wafers (4) aufgenommenen Bildes relativ zu der Intensität eines Farbbildsignals in einem blauen Spektralbereich veränderbar ist.

4. Vorrichtung nach einem der vorhergehenden Ansprüche, bei der die Farbänderungseinrichtung zumindest eine Farbfiltereinrichtung (16; 17-20) umfasst, um das Farbspektrum des Beleuchtungs-Lichtstrahls zu verändern.

5. Vorrichtung nach dem vorhergehenden Anspruch, bei der die Farbfiltereinrichtung zumindest einen Farbfilter (17-20) umfasst, der in einem Strahlengang des Beleuchtungs-Lichtstrahls (6) angeordnet ist.

6. Vorrichtung nach Anspruch 4, bei der die Farbfiltereinrichtung zumindest einen Farbfilter (17) umfasst, der zwischen einer Beleuchtungs-Lichtquelle (10) und einem Faserende eines Lichtleiters (11) oder eines Lichtleiterbündels (11) angeordnet ist.

7. Vorrichtung nach einem der Ansprüche 4 bis 6, bei der die Beleuchtungseinrichtung einen Temperaturstrahler (10), insbesondere ein Xenon-Blitzlicht, umfasst.

8. Vorrichtung nach dem vorhergehenden Anspruch, bei der die Farbfiltereinrichtung einen CTO-Filter umfasst, um die Farbtemperatur des Beleuchtungs-Lichtstrahls auf etwa 5600 K zu verändern.

9. Vorrichtung nach einem der vorhergehenden Ansprüche, bei der die Beleuchtungseinrichtung zumindest drei Farblichtquellen (23-25) umfasst, die Beleuchtungs-Lichtstrahlen mit jeweils einem anderen Farbspektrum abstrahlen.

10. Vorrichtung nach einem der vorhergehenden Ansprüche, weiterhin umfassend eine Datenausleseeinrichtung (13), um die Farbbildsignale der Bilderfassungseinrichtung (3) auszulesen und in den mehreren Spektralbereichen auszuwerten.

11. Vorrichtung nach dem vorhergehenden Anspruch, bei der eine Steuereinheit (28) die Intensität der mindestens einen Farblichtquelle so regelt, dass die Bilderfassungseinrichtung in allen Farbbildkanälen gleichmäßig ausgesteuert ist.

12. Verfahren zur Inspektion eines Wafers (4), bei dem zumindest eine Beleuchtungseinrichtung (2) einen Beleuchtungs-Lichtstrahl (6) auf eine Oberfläche (5) des Wafers (4) abstrahlt und eine Bilderfassungseinrichtung (3), die eine vorgegebene spektrale Empfindlichkeit aufweist, ein Bild von einem beleuchteten Bereich (32) auf der Oberfläche (5) des Wafers (4) in einer Mehrzahl von Spektralbereichen erfasst, wobei das Farbspektrum des Beleuchtungs-Lichtstrahls (6) oder des von der Oberfläche (5) des Wafers (4) aufgenommenen Bildes so verändert wird, dass das Farbspektrum des Beleuchtungs-Lichtstrahls (6) oder des von der Oberfläche (5) des Wafers (4) aufgenommenen Bildes an die spektrale Empfindlichkeit der Bilderfassungseinrichtung (2) angepasst wird.

13. Verfahren nach Anspruch 12, bei dem zum Anpassen des Farbspektrums des Beleuchtungs-Lichtstrahls (6) oder des von der Oberfläche (5) des Wafers (4) aufgenommenen Bildes an die spektrale Empfindlichkeit der Bilderfassungseinrichtung (2) die Intensität eines Farbbildsignals der Bilderfassungseinrichtung (3) in einem Spektralbereich relativ zu der Intensität eines anderen Farbbildsignals der Bilderfassungseinrichtung (3) in einem anderen Spektralbereich verändert wird.

14. Verfahren nach Anspruch 12, bei dem die Intensität eines Farbbildsignals in einem roten Spektralbereich durch Verändern des Farbspektrums des Beleuchtungs-Lichtstrahls (6) oder des von der Oberfläche (5) des Wafers (4) aufgenommenen Bildes relativ zu der Intensität eines Farbbildsignals in einem blauen Spektralbereich verändert wird.

15. Verfahren nach einem der Ansprüche 12 bis 14, bei dem zumindest ein Farbfilter (17-29) in einem Strahlengang des Beleuchtungs-Lichtstrahls angeordnet wird.

16. Verfahren nach dem vorhergehenden Anspruch, bei dem ein Transmissionsvermögen des Farbfilters kontinuierlich verändert wird.

17. Verfahren nach einem der Ansprüche 12 bis 16, bei dem zumindest drei Beleuchtungs-Lichtstrahlen in jeweils anderen Spektralbereichen abgestrahlt werden.

18. Verfahren nach dem vorhergehenden Anspruch, bei dem eine Steuereinheit (28) die Intensität von mindestens einem Beleuchtungs-Lichtstrahl (6) auf eine vorgebbare Intensität regelt, so dass die Bilderfassungseinrichtung (2) in allen Farbbildkanälen gleichmäßig ausgesteuert ist.
